# EUROPÄISCHE PATENTANMELDUNG

(11) **EP 2 546 132 A2**
(43) Veröffentlichungstag der Anmeldung: **16.01.2013**
(21) Anmeldenummer: 12005136.2
(22) Anmeldetag: 12.07.2012
(51) Int. Cl.: B62K 19/30, B62J 99/00, B62J 11/00, B62M 25/02

(54) **Zugverlegung für ein Zweirad sowie Rahmen und Schaltauge für die Verwendung einer Zugverlegung**

(30) Priorität: 12.07.2011 DE 202011103320 U
(71) Anmelder: CUBE-Bikes Pending System GmbH & Co. Vertriebs KG, 95679 Waldershof (DE)
(72) Erfinder: Dauth, Gregor, 95615 Marktredwitz (DE); Schenkl, Bernd, 95679 Waldershof (DE)
(74) Vertreter: Herden, Andreas F.

(57) **Zusammenfassung**

Die Erfindung betrifft eine Zugverlegung für ein Zweirad, insbesondere für den Rahmen eines Mountainbikes oder Rennrads für die Verlegung von Bereichen eines Zuges oder die nahezu vollständige Verlegung eines Zuges, insbesondere eines mechanischen Brems- oder Schaltzuges, eines hydraulischen oder Bowdenzuges für eine Sattelstütze, insbesondere einer Sattelstütze mit im Sitzrohr verlaufendem Bowdenzug, einer hydraulischen Leitung und/oder einer elektrischen Leitung, bei welcher durch die Auswahl von Führungsteilen, welche dem jeweils zu führenden Zug zugeordnet sind, für verschiedenartige Züge jeweils eine Zugverlegung für einen Rahmen des Zweirads bereitgestellt wird.

## Beschreibung

Die Erfindung betrifft eine Zugverlegung für ein Zweirad, insbesondere für ein Mountainbike oder Rennrad sowie ein Schaltauge für eine solche Zugverlegung.

Bei heutigen Mountainbikes oder Rennrädern werden Schaltungen und Bremsen sowie nach und nach auch weitere Komponenten über mechanische Züge, Bowdenzüge, betätigt, welche an oder auch bereichsweise im Rahmen des Mountainbikes oder Rennrads verlegt sind. Wenn diese Zugverlegungen vom Rahmen zum Lenker des Zweirads führen, ist es möglich, nicht nur die Bremsen sondern auch die Schaltung und gegebenenfalls weitere Baugruppen wie Fahrwerkskomponenten und damit die Abstimmung des Fahrwerks oder absenkbare Sattelstützen vom Lenker aus zu bedienen und während der Betätigung beide Hände am Lenker zu belassen, was besonders in schwierigen Fahrsituationen sehr hilfreich sein kann.

Neben den mechanisch, vorzugsweise mittels Bowdenzügen betätigten Schaltungen kommen, insbesondere im High-EndBereich für renntaugliche Mountainbikes oder Rennräder hydraulische Schaltungen auf, welche sehr leicht sind und äußerst präzise schalten können. (Siehe beispielsweise den Hersteller Rot mit dessen hydraulischer Schaltung RotS).

Will nun der engagierte Mountainbiker oder Rennradfahrer eine Umrüstung von mechanischem Zug auf hydraulischen Zug, also eine Umrüstung mit Verlegung einer hydraulischen Leitung vornehmen, so ist diese bei den herkömmlichen Rahmen ohne Schädigung des Rahmes sehr schwer oder es werden häufig unschöne Verlegung derart vorgenommen, dass von außen Zughalterungen an den Rahmen angeklebt werden und die ursprünglichen Zugverlegungsteile unbelegt weiterbestehen oder nach deren Entfernung Schädigungen am Rahmen verbleiben.

Immer mehr kommen elektrische Schaltungen und Federelemente auf, für welche ebenfalls andere Zugverlegungsorgane sinnvoll sind als für mechanische oder hydraulische Betätigungsorgane.

Darüber hinaus besteht wie eingangs erwähnt bei höherwertigen Mountainbikes ein Trend, auch das Fahrwerk, insbesondere dessen Federelemente, vom Lenker aus abzustimmen. So werden Betätigungsorgane für vordere und hintere Feder- und Dämpfungssysteme vermehrt am Lenker angeordnet, welches es auf sehr sichere und einfache Weise ermöglicht, das Fahrwerk der jeweiligen momentanen Fahrsituation anzupassen, ebenfalls ohne dabei die Hände vom Lenker nehmen zu müssen.

Im Down-Hill- und Cross-Country-Bereich werden zunehmend absenkbare Sattelstützen eingesetzt, die es dem Fahrer ermöglichen, in schwierigen Trails seinen Schwerpunkt weit nach hinten, vorzugsweise bis hinter den Sattel des Bikes zu verlegen und somit die Manövrierbarkeit des Bikes auch auf steilen abwärts führenden Strecken zu verbessern oder überhaupt noch aufrecht zu erhalten. Auch bei diesen absenkbaren Sattelstützen gibt es, die auch als Remote-Control bezeichneten Fernbetätigungen, welche über mechanische Bowdenzüge oder hydraulische Leitungen eine Absenkung des Sattels vom Lenker aus ermöglichen.

Ein weiterer Trend besteht in der Verwendung elektrisch unterstützter Antriebe, die beispielsweise im Sattelrohr oder in einer Nabe des Zweirads angeordnet sein können. Diese Antriebe weisen jedoch mindestens eine Steuerleitung und in der Regel, wenn die Energieversorgung nicht direkt am Antrieb angeordnet ist, auch Versorgungsleitungen für die Verbindung zu einem elektrischen Energiespeicher, wie einem Akkumulator oder Batterien auf. Die meisten dieser Antriebe sind nachrüstbar, diese bedeutet nachträglich in den Rahmen oder ein Rad des Zweirads integrierbar. Hierbei sind jedoch ebenfalls die Steuer- und Versorgungsleitungen des Antriebs am oder im Rahmen des Zweirads unterzubringen, welches bei einer Nach- oder Umrüstung in der Regel zu den vorstehend beschriebenen unschönen Veränderungen des Erscheinungsbilds des Zweirads führt.

Derzeit werden bei der Fertigung häufig Teile von Zugverlegungen durch Löten, Nieten oder Kleben am Rahmen des Mountainbikes oder Rennrad dauerhaft so angebracht, dass der entsprechende Typ von Zug in der Regel für die gesamte Lebens- oder Gebrauchsdauer des Mountainbikes oder Rennrades damit gehalten werden kann.

Häufig werden diese Zugverlegungsteile auch vor der Lackierung des Rahmens an diesem angebracht, um einen ästhetischeren Eindruck zu erwecken, welcher die Zugverlegungsteile als integrale Rahmenbestandteile erscheinen lässt.

Hierdurch jedoch ist ein Austausch oder auch nur die Änderung einer Zugverlegung ohne eine Schädigung des Rahmens sehr schwierig oder bei aus Faserverbundwerkstoffen bestehenden Rahmen sogar teilweise unmöglich.

Eine Nach- oder Umrüstung wird durch diese bauliche Ausgestaltung vom Hersteller oder Erstausrüster bis dato generell nicht unterstützt.

Ferner ist beim Hersteller von Mountainbikes oder Rennrädern eine Vielfalt verschiedner Rahmentypen vorzuhalten, welche für den jeweiligen Zugtyp vorgesehen ist.

Der Erfindung liegt die Aufgabe zugrunde, die Nach- oder Umrüstung von Zugverlegungen zu vereinfachen und insbesondere auch ein System von Teilen für eine Zugverlegung zur Verfügung zu stellen, welches die Verwendung von einem Rahmentyp für eine Vielzahl von Ausstattungen mit verschiedenartigen Zugverlegungen ermöglicht.

Diese Aufgabe wird beispielsweise mit den Merkmalen des Anspruchs 1 gelöst, folglich mit einer Zugverlegung für ein Zweirad, insbesondere für den Rahmen eines Mountainbikes oder Rennrads für die Verlegung von Bereichen eines Zuges oder die nahezu vollständigen Verlegung eines Zuges, insbesondere eines mechanischen Brems- oder Schaltzuges, eines hydraulischen oder Bowdenzuges für eine Sattelstütze, insbesondere einer Sattelstütze mit im Sitzrohr verlaufendem Bowdenzug, einer hydraulischen Leitung und/oder einer elektrischen Leitung, bei welcher durch die Auswahl von Führungsteilen, welche dem jeweils zu führenden Zug zugeordnet sind, für verschiedenartige Züge jeweils eine Zugverlegung für einen Rahmen des Zweirads bereitgestellt wird.

Im Sinne der Erfindung umfassen die verschiedenen Typen von Zügen mechanische Brems- oder Schaltzüge, hydraulische Züge wie hydraulischen Leitung sowie auch elektrische Leitungen, da auch durch letztere Schalt- sowie Steuer- und Regelvorgänge bewirkt werden können, somit alle Steuermittel, welche für das Bremen, Schalten, Beschleunigen sowie die Feder- und Dämpfungselemente des Fahrwerks und des Rahmens sowie von dessen Anbauteilen wie Sattelstützen verwendet werden können.

Für den Hersteller ist nur noch die Vorhaltung im Wesentlichen eines einzigen Rahmentyps, vorzugsweise in der jeweils verfügbaren Größe nötig, da die Zugverlegungsteile für alle Rahmengrößen identisch sein können.

Vorteilhaft sind die Teile der Zugverlegung lösbar am Rahmen des Mountainbikes oder Rennrads gehalten und ist nach dem Lösen durch Austausch von Teilen der Zugverlegung eine Umrüstung der Zugverlegung für einen anderen Typ eines Zuges vornehmbar.

Sehr einfach wird hierdurch die Umrüstung von mechanisch auf elektrisch, hydraulisch oder umgekehrt möglich.

Wenn Bereiche des jeweiligen Zuges durch das Unterrohr und/oder durch die Kettenstrebe und/oder das Sitzrohr des Mountainbikes oder Rennrads geführt sind, ergibt sich hierdurch eine sehr geschützte Verlegung für den jeweiligen Zug und ist der Rahmen in seinem Design nicht durch an diesem entlang geführte Züge gestört.

In besonders vorteilhafter Ausgestaltung kann dabei die Kettenstrebe nach hinten offen ausgeführt und können der Schaltzug oder elektrische Steuer- und/oder Versorgungsleitungen aus diesem herausgeführt sein.

Besonders vorteilhaft kann die Zugverlegung Einsätze für zugeordnete Abschnitte des Rahmens des Mountainbikes oder Rennrads, umfassen, welche an diesen zugeordneten Abschnitten des Rahmens des Mountainbikes oder Rennrads anbringbar, vorzugsweise lösbar anbringbar sind, da in diesem Falle eine Vielzahl verschiedener Einsätze, je nach zu verlegendem Zug an dem Rahmen anbringbar sind.

Ein Satz von verschiedenen Einsätzen, die jeweils einem bestimmten Typ von Zug zugeordnet sind, gestattet dabei eine Vielfalt an Erstausrüstungs- sowie Nachrüstmöglichkeiten.

Wenn die Einsätze Zuganschläge für einen Bowden- oder einen mechanischen Zug umfassen, kann hierdurch beispielsweise innerhalb des Rahmens der reine Innenzug, also das Zugseil, ohne den umhüllenden Bowden verlegt werden, welches zu einer Gewichtsersparung führt, wie dieses selbst wenn es nur einige Gramm sind, dennoch im Tuning und im High-EndBereich oft erwünscht ist.

Wenn die Einsätze Abdeckungen für Öffnungen im Rahmen des Mountainbikes oder Rennrads umfassen, kann auch beispielsweise ein einziges elektrisches, vorzugsweise mehradriges Kabel mehrere Steuerfunktionen ersetzen, welche vordem durch mehrere mechanische Züge zu übernehmen waren.

Ferner können alternativ oder zusätzlich elektrisch oder elektronisch betätigte Einrichtungen auch über eine Funkverbindung, wie Bluetooth, WIND (Marke der Firma Polar) oder ANT (seitens der Firma Polar Electro verwendete Technologie) verfügen, welche die Verwendung von Zügen für die jeweils betätigte Komponente überflüssig machen, so dass nur noch eine Abdeckung für die zugeordnete Öffnung im Rahmen zu verwenden ist.

Mit einem Satz von Zugverlegungsteilen, der je nach Einsatzzweck jeweils Einsätze für die Verlegung eines Bowdenzuges oder einer hydraulischen Leitung oder einer elektrischen Leitung und vorzugsweise Einsätze zur Abdeckung von Bereichen eines Rahmens umfasst, kann sowohl der Erstausrüster als auch der Nach- oder Umrüstende sehr einfach Standardrahmen ausstatten oder Rahmen nachträglich um- oder nachrüsten.

Vorteilhaft weist der Rahmen Öffnungen für die Verwendung zugeordneter Teile einer Zugführung sowie vorzugsweise Befestigungselemente für die lösbare Befestigung von Teilen der Zugführung auf, welche standardisiert sein können oder auch für den Hersteller geschützte Form annehmen können, wie beispielsweise dessen Logo oder eine andere ihm geschützte Kennzeichnung.

Sehr vorteilhaft ist bei einem solchen Rahmen auch eine zur Rückseite des Rahmens hin geöffnete Kettenstrebe, da dann aus dieser der jeweilige Zug oder auch eine elektrische Leitung direkt zur Schaltung geführt sein kann.

Vorteilhaft ist auch eine im Bereich des Tretlagers an dessen Unterseite, vorzugsweise in einer Öffnung des Rahmens angeordnete Zugführung, wobei die Öffnung durch einen als Abdeckung ausgebildeten Einsatz verschließbar ist, da hierdurch sowohl die Zugführung leicht verlegt und ersetzt werden kann, als auch ein Schutz gegenüber Verschmutzung und Verschleiß bereitgestellt wird. Darüber hinaus kann bei dieser Ausführungsform sehr vorteilhaft bei einem Austausch dieser Abdeckung oder zusätzlich zu dieser auch eine Halterung für einen Akkumulator, beispielsweise einer elektrischen oder elektronischen Schaltung bereitgestellt werden.

Bei einer besonders vorteilhaften Ausführungsform der Erfindung wird ein Schaltauge verwendet, insbesondere für eine Zugverlegung, wie diese vor- und nachstehend näher beschrieben ist, welches einen Zuganschlag oder eine Zughalterung für einen mechanischen oder einen Bowdenzug umfasst. Hierbei kann beispielsweise ein aus der nach hinten offenen Kettenstrebe austretender Zug auf sehr direkte und Platz sparende Weise mit der Schaltung verbunden oder dieser zugeführt werden.

Vorteilhaft ist dieses auch für eine hydraulische Schaltung möglich, wenn das Schaltauge eine Halterung für eine Hydraulikleitung umfasst.

Für in der Hinterradnabe angeordnete elektrische Antriebe ist ein Schaltauge besonders vorteilig, welches eine Halterung für eine elektrische Leitung und/oder einen Anschluß für einen elektrischen Leiter umfasst, insbesondere um für elektrisch nicht oder wenig leitfähige Rahmen eine Anschlußpunkt für den elektrischen Antrieb, vorzugsweise mit der Achsaufnahme des Hinterrads bereit zu stellen. Hierdurch können Rahmen mit Faserverbundwerkstoffen auch auf einfache Weise mit elektrischen Antrieben nachgerüstet werden, selbst wenn dieser Antrieb ansonsten eine elektrische Leitung durch einen gut leitfähigen metallischen Rahmen erfordern würde. Diese elektrische Leitung kann der Vermeidung statischer Aufladungen des elektrischen Antriebs gegenüber dem Rahmen oder elektrischen Komponenten die am Rahmen angeordnet sind, wie Steuergeräte des Motors oder der elektrischen Energieversorgung dienen.

Die Erfindung wird nachfolgend anhand bevorzugter Ausführungsformen und unter Bezugnahme auf die beigeschlossenen Zeichnungen detaillierter beschrieben.

Es zeigen:
- Figur 1: einen Ausschnitt eines Rahmens einer ersten bevorzugten Ausführungsform mit der erfindungsgemäßen Zugverlegung, welche für die Verlegung von mechanischen Zügen geeignet ist und bei welcher die Einsätze für das Unterrohr des Rahmens in einer Explosionsdarstellung gezeigt sind,
- Figur 2: die in Figur 1 dargestellte erste bevorzugte Ausführungsform der Erfindung, bei welcher die Einsätze für das Unterrohr des Rahmens in deren am Unterrohr montierten Stellung gezeigt sind,
- Figur 3: die in den Figuren 1 und 2 dargestellte erste bevorzugte Ausführungsform der Erfindung, bei welcher die Einsätze für das Unterrohr des Rahmens in deren am Unterrohr montierten Stellung gezeigt sind und bei welcher mechanische Züge, insbesondere Bowdenzüge oder hydraulische Leitungen in den Einsätzen geführt sind,
- Figur 4: einen Ausschnitt eines Rahmens einer zweiten bevorzugten Ausführungsform mit der erfindungsgemäßen Zugverlegung, welche für die Verlegung von elektrischen Zügen oder elektrischen Leitungen geeignet ist und bei welcher die Einsätze für das Unterrohr des Rahmens in deren am Unterrohr noch nicht montierten Stellung gezeigt sind,
- Figur 5: die in den Figur 4 dargestellte zweite bevorzugte Ausführungsform der Erfindung, bei welcher die Einsätze für das Unterrohr des Rahmens in deren am Unterrohr montierten Stellung gezeigt sind und bei welcher elektrische Züge, insbesondere elektrische Leitungen in einem Einsatz geführt sind und ein Einsatz als Abdeckung für eine Rahmenöffnung ausgebildet ist,
- Figur 6: einen Ausschnitt des Rahmens der ersten bevorzugten Ausführungsform im Bereich des Tretlagers des Rahmens mit der erfindungsgemäßen Zugverlegung, welche für die Verlegung von mechanischen Zügen geeignet ist ohne daran angebrachten Einsatz,
- Figur 7: die in Figur 6 dargestellte erste bevorzugte Ausführungsform der Erfindung im Bereich des Tretlagers des Rahmens, bei welcher ein Einsatz für das Unterrohr des Rahmens in einer Explosionsdarstellung gezeigt ist,
- Figur 8: die in den Figuren 6 und 7 dargestellte erste bevorzugte Ausführungsform der Erfindung im Bereich des Tretlagers, bei welcher ein Einsatz für den Rahmen in dessen am Rahmen montierter Stellung gezeigt ist,
- Figur 9: einen Ausschnitt des Rahmens der zweiten bevorzugten Ausführungsform im Bereich des Tretlagers des Rahmens mit der erfindungsgemäßen Zugverlegung, welche für die Verlegung von elektrischen Zügen, insbesondere elektrischen Leitungen geeignet ist mit einem am Rahmen angebrachten Einsatz, welcher ein Akkumulatorgehäuse trägt,
- Figur 10: die in Figur 9 dargestellte zweite bevorzugte Ausführungsform der Erfindung im Bereich des Tretlagers des Rahmens, bei welcher der in Figur 9 gezeigte Einsatz für das Unterrohr des Rahmens in einer Explosionsdarstellung gezeigt ist, bei welcher der Akkumulator vom Einsatz abgenommen ist,
- Figur 11: die in den Figuren 9 und 10 dargestellte zweite bevorzugte Ausführungsform der Erfindung im Bereich des Tretlagers, bei welcher bei der Akkumulator vom Einsatz abgenommen ist und die Halterung für den Akkumulator in einer Explosionsdarstellung gezeigt ist,
- Figur 12: einen Ausschnitt des Hinterbaus eines Rahmens einer weiteren bevorzugten erfindungsgemäßen Ausführungsform mit einem Schaltauge, welches in eine nach hinten geöffnete Kettenstrebe eingreift und eine Halterung für einen Zug aufweist,
- Figur 13: den in Figur 12 gezeigten Ausschnitt des Hinterbaus, bei welchem das Schaltauge und ein Zug in einer Explosionsdarstellung gezeigt sind.

### Detaillierte Beschreibung bevorzugter Ausführungsformen

Bei der nachfolgenden detaillierten Beschreibung der Erfindung bezeichnen gleich Bezugszeichen in den Figuren jeweils gleiche, ähnliche oder gleichwirkende Bestandteile oder Baugruppen in der jeweiligen verschiedenen Ausführungsformen der Erfindung.

Zur besseren Verdeutlichung der Erfindung sind die in den Figuren dargestellten bevorzugten Ausführungsformen jedoch nicht immer maßstabsgerecht gezeigt.

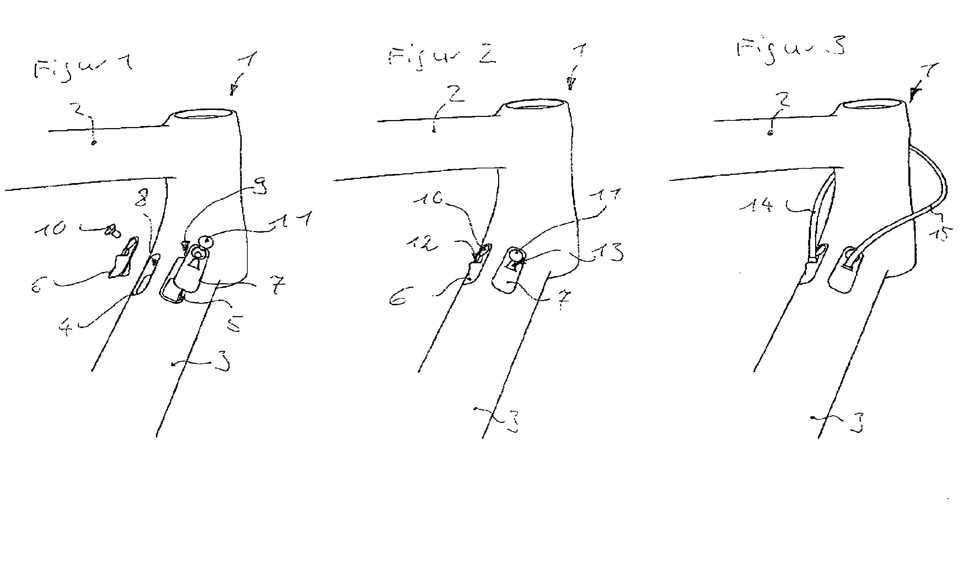

Nachfolgend wird auf Figur 1 Bezug genommen, welche einen Ausschnitt eines Rahmens 1 mit Bereichen seines Oberrohrs 2 sowie Unterrohrs 3 einer ersten bevorzugten Ausführungsform mit nachstehen noch detaillierter beschrieben Teilen der erfindungsgemäßen Zugverlegung, zeigt.

Der Rahmen 1 kann mit dessen jeweiligen Bestandteilen ein Aluminium-, ein Stahl- oder ein Titanrahmen sein oder auch aus einem Verbundmaterial wie Carbon-, Kevlar- oder ähnlichem Verbungfasermaterial bestehen. Ferner kann der Rahmen auch eine bereichsweise Mischung der vorstehend genannten Materialien und auch Materialien aus anderen metallischen Legierungen umfassen.

Diese erste bevorzugte Ausführungsform ist für die Verlegung von mechanischen Zügen geeignet und es weist das Unterrohr 3 des Rahmens 1 in dessen oberen Bereich zwei Öffnungen 4, 5 auf, in welche Teile 6, 7 der Zugführung einbringbar und lösbar befestigbar sind.

In der jeweiligen Öffnung 4, 5 des Rahmens 1 sind Befestigungselemente 8, 9 im Rahmen 1 für die Befestigung der zugeordenten Teile 6, 7 der Zuführung angeordnet.

Die Befestigungselemente 8, 9, von welchen das Befestigungselement 9 in Figur 1 von dem Einsatz 7 verdeckt ist, sind vorzugsweise jedoch nicht generell jeweils vom gleichen Typ. Für eine lösbare Befestigung kann das Befestigungselement 8, 9 eine Bohrung mit Innengewinde aufweisen und können zugeordnete Befestigungselemente 10, 11 Schrauben umfassen.

Alternativ kann das Befestigungselement 8, 9 auch eine Bohrung ohne Gewinde aufweisen und können zugeordnete Befestigungselemente 10, 11 Niete oder Spreitzdübel oder einfach nur zylindrische Fortsätze umfassen, welche in die Bohrung eingepresst werden und in dieser formschlüssig gehalten sind.

Figur 2 zeigt die in Figur 1 dargestellte erste bevorzugte Ausführungsform der Erfindung, bei welcher die Einsätze 6, 7 für das Unterrohr 3 des Rahmens 1 in deren am Unterrohr 3 montierten Stellung dargestellt sind.

Die Einsätze 6, 7 weisen bei der ersten bevorzugten erfindungsgemäßen Ausführungsform Zuganschläge 12, 13 für Bowdenzüge auf, welche es ermöglichen, den Innenzug des Bowdenzuges in Gewicht sparender Weise ohne dessen äußere Hülle im Rahmen 1 zu verlegen.

Eine derartige Verlegung ist in Figur 3 schematisch dargestellt.

Alternativ weisen die Einsätze 6, 7 jeweils Durchgangsöffnungen 12, 13 auf, welche geeignet sind, Züge 14, 15 aufzunehmen und in das Unterrohr 3 des Rahmens 1 zu führen. Diese Durchgangsöffnungen 12, 13 können sowohl mechanische Bowdenzüge als auch hydraulische Leitungen führen, welche jeweils spielfrei reibschlüssig mit definierten Kräften gehalten sind.

Hierdurch kann eine Zugverlegung mit durchgehendem Bowdenzug oder auch die Verlegung einer hydraulischen Leitung vorgenommen werden.

Bei entsprechender Dimensionierung können diese Durchgangsöffnungen 12, 13 auch elektrische Leiter, beispielsweise ein- oder mehradrige Leiter führen, die um Scheuerstellen zu vermeiden ebenfalls jeweils spielfrei reibschlüssig mit definierten Kräften gehalten sind.

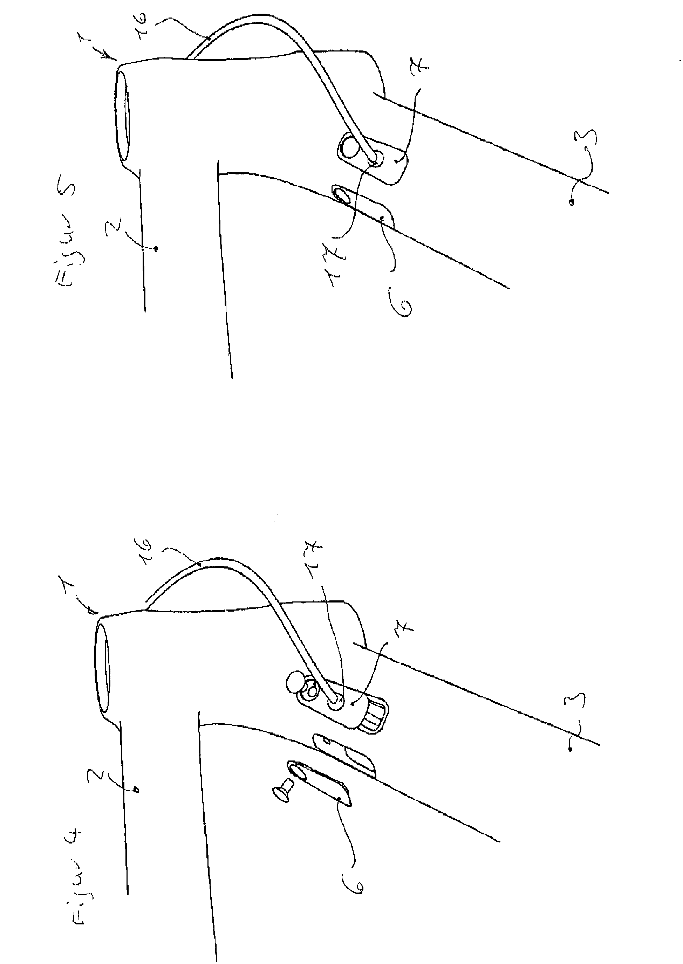

Eine derartige, zweite bevorzugte erfindungsgemäße Ausführungsform ist auch in den Figuren 4 und 5 gezeigt, wobei Figur 4 einen Ausschnitt des Rahmens 1 der zweiten bevorzugten Ausführungsform mit der erfindungsgemäßen Zugverlegung, welche in diesem Fall für die Verlegung von elektrischen Zügen, diese bedeutet einer ein- oder mehradrigen elektrischen Leitung geeignet ist und bei welcher die Einsätze 6, 7 für das Unterrohr 3 des Rahmens 1 in deren am Unterrohr 1 noch nicht montierten Stellung gezeigt sind.

Bei dieser Ausführungsform kann beispielsweise ein elektrisches oder elektronisches Schaltwert und ein mechanischer Umwerfer verwendet werden, welcher beispielsweise über den in Figur 4 und Figur 5 dargestellten Zug 16 betätigt ist.

Figur 5 zeigt die in den Figur 4 dargestellte zweite bevorzugte Ausführungsform der Erfindung, bei welcher die Einsätze 6, 7 für das Unterrohr 3 des Rahmens 1 in deren am Unterrohr 3 montierten Stellung gezeigt sind und bei welcher alternativ zu einem mechanischen Zug ein elektrische Zug 16 mit einer aus elastischem Material bestehenden Tülle 17 im Einsatz 7 gehalten ist.

Bei dieser Ausführungsform ist deren Einsatz 6 als reine Abdeckung für die zugeordnete Öffnung 4 des Unterrohrs 3 des Rahmens 1 ausgebildet.

Alternativ oder ergänzend zu den in den Figuren 1 bis 5 dargestellten Zugführungsteilen 6 und 7 können beide oder auch nur eines von beiden auch zwei Durchführungen aufweisen, um derart beispielsweise neben den Zügen für die Schaltung auch noch Züge für eine Bremse, eine absenkbare Sattelstütze oder ein etwa per Remote-Control abstimmbares Fahrwerk aufzunehmen.

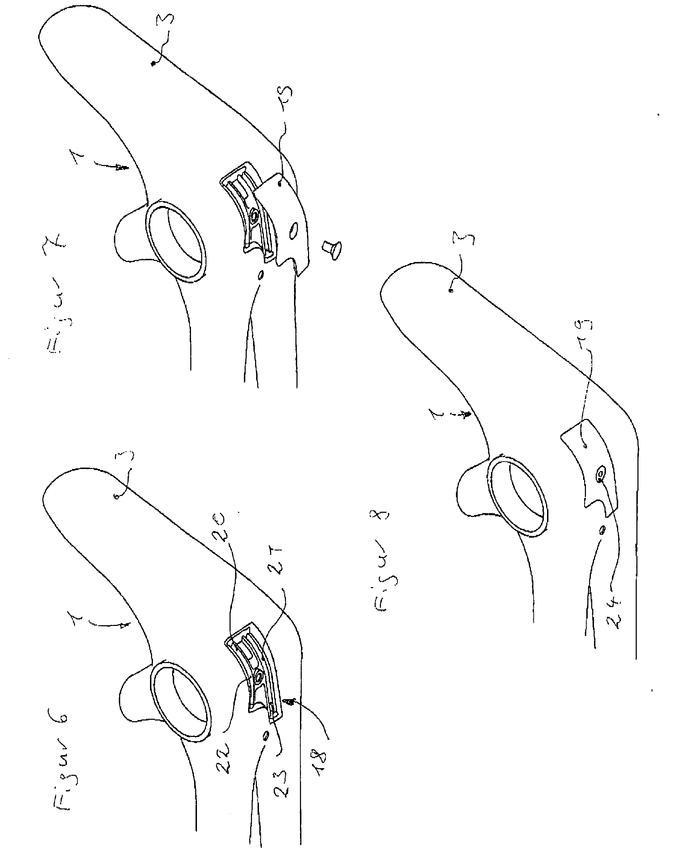

Nachfolgend wird auf die Figuren 6 bis 8 Bezug genommen, in welchen Figur 6 einen Ausschnitt des Rahmens 1 der ersten bevorzugten Ausführungsform im Bereich des Tretlagers des Rahmens 1 mit der erfindungsgemäßen Zugverlegung zeigt, zunächst ohne den der Rahmenöffnung 18 zugeordneten Einsatz 19.

Für die Verlegung von mechanischen Zügen, insbesondere die Führung der Innenzüge von Bowdenzügen weist diese Ausführungsform jeweils Zugführungen 20, 21 auf, wobei die Zugführung 20 für den Zug eines Umwerfers und die Zugführung für den Zug des hintere Schaltwerks geeignet ist.

Da diese Umwerfer sowie Schaltwerke dem Fachmann auf diesem Gebiet wohlbekannt sind, wird auf deren Darstellung in den Zeichnungen sowie deren detaillierte Beschreibung verzichtet.

Beide Zugführungen 20, 21 können durch Wahl von deren Abmessungen, insbesondere des Durchmessers von deren jeweiliger Längsnut 22, 23 sowohl für den Innengzug als auch für den gesamten Bowdenzug oder für eine hydraulische oder elektrische Leitung geeignet ausgebildet werden.

Figur 7 zeigt die in Figur 6 dargestellte erste bevorzugte Ausführungsform der Erfindung im Bereich des Tretlagers des Rahmens 1, bei welcher ein Einsatz 19 für das Unterrohr 3 des Rahmens 1 in einer Explosionsdarstellung wiedergegeben ist.

Figur 8 zeigt die in den Figuren 6 und 7 dargestellte erste bevorzugte Ausführungsform der Erfindung, bei welcher der Einsatz 19 für den Rahmen 1 in dessen am Rahmen 1 montierter Stellung dargestellt ist, insbesondere wie dieser mit einem lösbaren Befestigungsmittel, beispielsweise einer Schraube 24 an diesem gehalten ist.

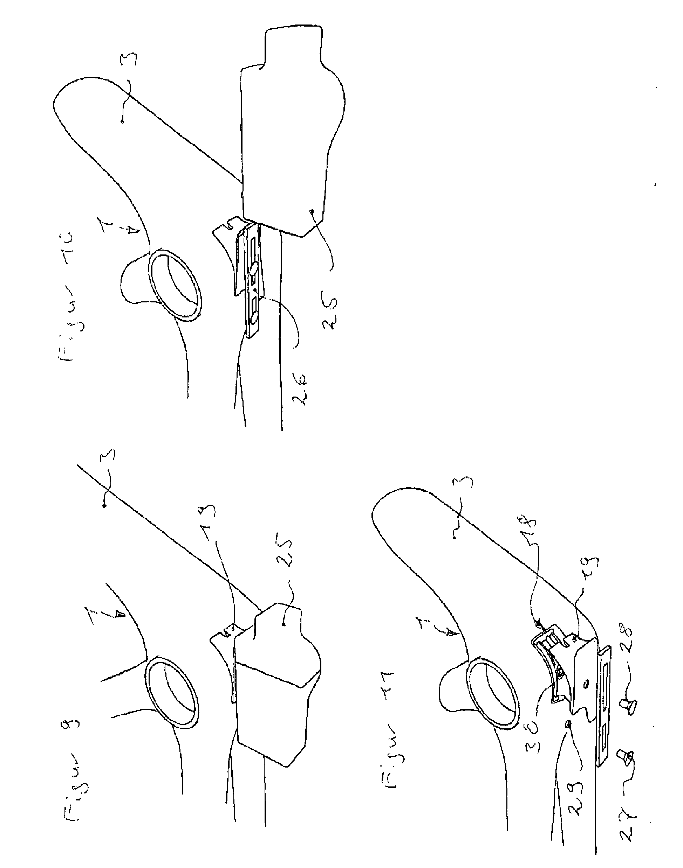

Nachfolgend wird auf die Figuren 9 bis 11 Bezug genommen.

In diesen zeigen Figur 9 einen Ausschnitt des Rahmens der zweiten bevorzugten Ausführungsform im Bereich des Tretlagers des Rahmens 1 mit der erfindungsgemäßen Zugverlegung, welche für die Verlegung von elektrischen Zügen 16, insbesondere elektrischen Leitungen 16 geeignet ist mit einem am Rahmen angebrachten Einsatz, welcher ein Akkumulatorgehäuse 25 für eine dem Fachmann bekannte, ansonsten nicht näher dargestellte elektrische oder elektronisch Schaltung trägt.

Alternativ zu dem in Figur 5 gezeigten Kabel 16 kann die elektronisch oder elektrisch betägigte Schaltung auch über eine Funkverbidnung, wie Bluetooth, WIND (Marke der Firma Polar) oder ANT (seitens der Firma Polar Electro verwendete Technologie) verfügen, welche die Verwendung von eines Zuges überflüssig macht.

Figur 10 zeigt die in Figur 9 dargestellte zweite bevorzugte Ausführungsform der Erfindung im Bereich des Tretlagers des Rahmens 1 , bei welcher der in Figur 9 gezeigte Akkumulator 25 in einer Explosionsdarstellung relativ zum Rahmen 1 gezeigt ist und bei welcher der Akkumulator 25 vom Einsatz 19 abgenommen ist, um einen Halter 26 für den Akkumulator 25 erkennbar zu machen.

Dieser Halter 25 definiert eine Schiene für eine zugeordente Aufnahme des Akkumulators 25, so dass dieser auf den Halter 26 aufgeschoben und an diesem sicher, vorzugsweise verrastet gehalten werden kann.

Figur 11 zeigt die in den Figuren 9 und 10 dargestellte zweite bevorzugte Ausführungsform der Erfindung im Bereich des Tretlagers, bei welcher bei der Akkumulator 25 vom Einsatz 19 abgenommen und die Halterung 26 für den Akkumulator in einer Explosionsdarstellung relativ zum Rahmen 1 mit deren jeweiligen Befestigungsmitteln 27 bis 30 wiedergegeben ist. Diese Befestigungsmittel sind vorzugsweise Schrauben 27, 28 und zugeordnete Bohrungen 29, 30 mit Innengewinde.

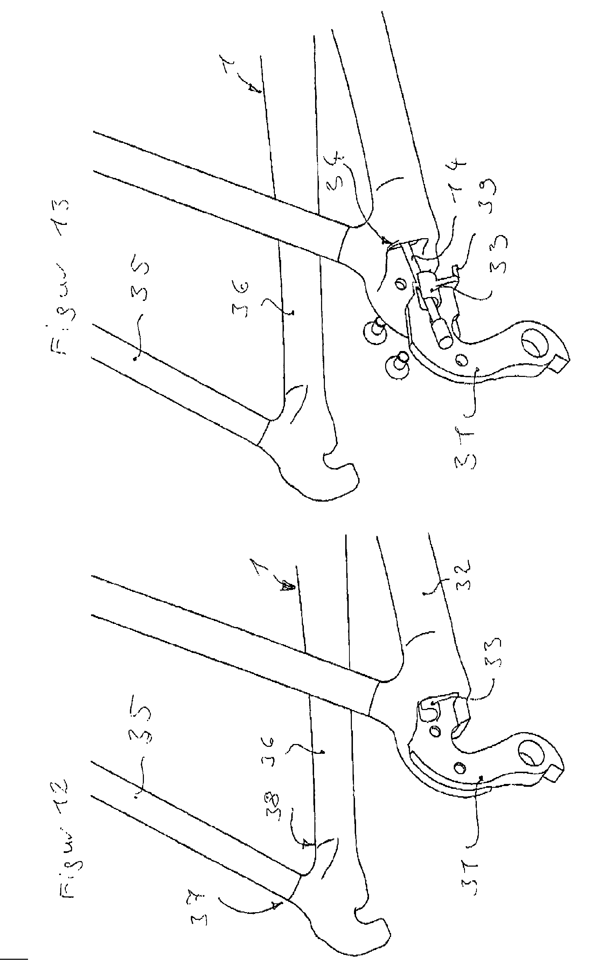

Nachfolgend wird auf die Figuren 12 und 13 Bezug genommen.

Bei diesen zeigt Figur 12 einen Ausschnitt des Hinterbaus des Rahmens 1 einer weiteren bevorzugten erfindungsgemäßen Ausführungsform mit einem Schaltauge, welches in eine nach hinten geöffnete Kettenstrebe 32 des Rahmens 1 eingreift und eine Halterung 33 für den Zug 14 aufweist,

Figur 13 zeigt den in Figur 12 gezeigten Ausschnitt des Hinterbaus, bei welchem das Schaltauge 32 und der Zug 14 in einer Explosionsdarstellung gezeigt sind.

Die Halterung 33 kann alternativ, insbesondere, wenn nur der Innenzug eines Bowdenzugs 14 im Rahmen 1 verlegt werden soll einen Zuganschlag oder eine Zughalterung für einen mechanischen oder einen Bowdenzug umfassen, welcher sich dann als Bowdenzug mit Mantel von der Halterung 33 bis zum Schaltwerk erstrecken kann.

Bei dieser Ausführungsform gestattet die mit der Öffnung 34 versehene Kettenstrebe 32 auch eine einfache Verlegung der jeweiligen Züge, da der Zug einfach von der Öffnung 18 aus durch die Kettenstrebe 32 nach hinten zur Öffnung 34 und durch diese nach außen geführt werden kann.

Wenn das Schaltauge 31 eine Halterung 33 für eine elektrische Leitung 16 und zusätzlich einen Anschluß 39 für einen elektrischen, in den Figuren nicht näher dargestellten weiteren Leiter umfasst, insbesondere um für elektrisch nicht oder wenig leitfähige Rahmen eine Anschlußpunkt für einen elektrischen Antrieb des Hinterrads, bereitzustellen, kann auch dieser weitere elektrische Leiter auf einfache Weise in der Kettenstrebe 32 geführt werden.

Wird neben den Zügen für die Schaltung eine weitere Leitung für eine Hydraulikbremse oder die Hinterradfederung im Rahmen 1 geführt, kann auch eine weitere Strebe 35, 36 des Hinterbaus des Rahmens 1 mit einer jeweiligen Öffnung 37, 38 nach hinten geöffnet oder mit einer weiteren Öffnung in deren Längserstreckung ausgebildet sein, um diesen Zug oder diese Leitung dort aus dem Rahmen 1 austreten zu lassen.

Der jeweilige Zug kann auch durch das Oberrohr oder das Sitzrohr verlaufend verlegt werden. Insbesondere bei Sattelstützen mit Remote-Control kann die Verlegung durch das Sitzrohr und das Unterrohr verlaufend vorgenommen werden.

Auf die vorstehend beschriebene Weise können somit Bereiche eines Zuges oder nahezu der vollständige Zug im Rahmen 1 verlegt werden.

Hierbei können die Zugverlegungsteile auch jeweils in einem vollständigen Satz angeboten werden, insbesondere um alle Einsätze für den Rahmen 1 für die Verlegung eines Bowdenzuges und/oder einer hydraulischen Leitung und/oder einer elektrischen Leitung, sowie alle nötigen Einsätze zur Abdeckung von Rahmenöffnungen bereitzustellen.

Die Teile dieses Satzes können als Fertigungsmaterial Kunststoff, Aluminium-, Stahl- oder Titan umfassen oder auch aus einen Verbundmaterial wie Carbon-, Kevlar- oder ein ähnlichen Verbungfasermaterial hergestellt sein oder dieses umfassen.

Bei einer bevorzugten Ausführungsform der Erfindung sind die Einsätze in der Farbe des Rahmens oder auf das Design abgestimmt ausgeführt.

Ferner können diese Einsätze standardisierte Größen oder Umfänge aufweisen, so dass ein Satz von Einsätzen für einen bestimmten Zugtyp für sämtliche Rahmen eines Herstellers verwendet werden kann, wodurch sich sowohl Lagerhaltungsals auch Fertigungskosten senken lassen.

Ferner wird hierdurch die Nachrüstung unterstützt, da in einfacher Weise vollständige Nachrüstsätze angeboten werden können, welche für alle Rahmen des jeweiligen Herstellers verwendbar sind.

Diese Nachrüstsätze können als hochwertige Tunigteile ausgeführt und beispielsweise aus Titan oder Faserverbundwerkstoffen, wie beispielsweise Nano-Carbon-Faserwerkstoffen gefertigt und entsprechend preislich gestaltet sein.

In attraktiver Weise kann der Originalhersteller die Verwendung von Nachahmungen auch markenrechtlich untersagen, wenn die Einsätze in Öffnungen im Rahmen des Mountainbikes oder Rennrads eingesetzt werden, welche etwa wie im Falle der Marke Cube deren Logo entsprechen oder ähneln, nämlich einem stilisierten Buchstaben "C" oder können andere geschützte Formen aufweisen, welche eine Art Eye-Catcher-Funktion übernehmen und die Rahmen des jeweiligen Herstellers "auf einen Blick" erkennen lassen können.

Um dem jeweiligen Mountainbike oder Rennrad ein etwas antiquiertes Aussehen zu verleihen, können die Einsätze auch Zuganschläge für eine außerhalb des Rahmens verlaufenden Bowdenzug umfassen und auf diese Weise einen herkömmlichen Rahmen nachahmen.

Ferner können auch bei der Erfindung die Zugverlegungsteile bereits vor der Lackierung des Rahmens an diesem angebracht werden, um einen ästhetischeren Eindruck zu erwecken, welcher die Zugverlegungsteile als integrale Rahmenbestandteile erscheinen lässt. Jedoch ist es dann für Nach- oder Umrüstungen in der Regel sehr einfach und ohne Schädigung des Erscheinungsbilds möglich, die Einsätze zu entfernen, wenn der Lack mit einer scharfen Klinge um den Einsatz herum durchtrennt wird und ein Einsatz für einen anderen Zugtyp mit gleichem Rahmendesign für die Nach- oder Umrüstung verwendet wird.

Um das Herausnehmen der Einsätze zu erleichtern kann der jeweilige Einsatz und/oder der Rahmen des Mountainbikes oder Rennrads eine kleinen, wenig sichtbaren Spalt zur Außenseite des Rahmens hin definieren, welcher das präzise Trennen erleichtert oder sogar in Bezug auf den Lack des Rahmes eine Art Sollbruchstelle definiert.

## Patentansprüche

1. Zugverlegung für ein Zweirad, insbesondere für den Rahmen eines Mountainbikes oder Rennrads
für die Verlegung von Bereichen eines Zuges oder die nahezu vollständige Verlegung eines Zuges, insbesondere eines mechanischen Brems- oder Schaltzuges, eines hydraulischen oder Bowdenzuges für eine Sattelstütze, insbesondere einer Sattelstütze mit im Sitzrohr verlaufendem Bowdenzug, einer hydraulischen Leitung und/oder einer elektrischen Leitung,
bei welcher durch die Auswahl von Führungsteilen, welche dem jeweils zu führenden Zug zugeordnet sind, für verschiedenartige Züge jeweils eine Zugverlegung für einen Rahmen des Zweirads bereitgestellt wird.

2. Zugverlegung nach Anspruch 1, bei welcher Teile der Zugverlegung lösbar am Rahmen des Mountainbikes oder Rennrads gehalten sind und durch Austausch von Teilen der Zugverlegung eine Umrüstung der Zugverlegung für einen anderen Typ eines Zuges vornehmbar ist.

3. Zugverlegung nach Anspruch 1 oder 2, bei welcher Bereiche des jeweiligen Zuges durch den Rahmen Mountainbikes oder Rennrads geführt sind.

4. Zugverlegung nach Anspruch 3, bei welcher Bereiche des jeweiligen Zuges durch das Unterrohr und/oder Oberrohr und/oder durch die Kettenstrebe und/oder das Sitzrohr des Mountainbikes oder Rennrads geführt sind.

5. Zugverlegung nach einem der vorstehenden Ansprüche umfassend Einsätze für zugeordnete Abschnitte des Rahmens des Mountainbikes oder Rennrads, welche an diesen zugeordneten Abschnitten des Rahmens des Mountainbikes oder Rennrads anbringbar, vorzugsweise lösbar anbringbar sind.

6. Zugverlegung nach Anspruch 5, bei welcher die Einsätze jeweils Einsätze umfassen zur Halterung von mechanischen Zügen, elektrischen und/oder hydraulischen Leitungen und von Akkumulatoren für elektrische Einrichtungen wie elektrische der elektronisch gesteuerte Schaltungen oder Fahrwerkskomponenten.

7. Zugverlegung nach Anspruch 5 oder 6, bei welcher die Einsätze Zuganschläge für einen Bowden- oder einen mechanischen Zug umfassen.

8. Zugverlegung nach Anspruch 5 oder 6, bei welcher die Einsätze Abdeckungen für Öffnungen im Rahmen des Mountainbikes oder Rennrads umfassen.

9. Satz von Zugverlegungsteilen, insbesondere für eine Zugverlegung nach einem der vorstehenden Ansprüche von 1 bis 8 umfassend
Einsätze für den Rahmen eines Zweirads, wobei die Einsätze Einsätze für die Verlegung eines Bowdenzuges und/oder einer hydraulischen Leitung und/oder einer elektrischen Leitung,
und/oder Einsätze zur Abdeckung von Bereichen eines Rahmens eines Rennrades oder Mountainbikes und/oder vorzugsweise ein Schaltauge nach einem der Ansprüche von 16 bis 18 umfassen.

10. Rahmen für ein Zweirad insbesondere für ein Mountainbike oder Rennrad, umfassend eine Zugverlegung nach einem der Ansprüche von 1 bis 8 oder zumindest Teile eines Satzes von Zugverlegungsteilen nach Anspruch 9.

11. Rahmen nach Anspruch 10, umfassend Öffnungen für zugeordnete Einsätze der Zugverlegung.

12. Rahmen nach Anspruch 10 oder 11 umfassend Befestigungsvorrichtungen, vorzugsweise zur lösbaren Befestigung von Teilen der Zugverlegung.

13. Rahmen nach Anspruch 10, 11 oder 12 umfassend als Befestigungsmittel Öffnungen oder Bohrungen für das Kleben, Nieten, Schrauben, lösbare Spreitzdübel, insbesondere Kunststoffdübel.

14. Rahmen für ein Zweirad, insbesondere für ein Mountainbike oder Rennrad, der insbesondere für die Verwendung einer Zugverlegung nach einem der vorstehenden Ansprüche von 1 bis 8 geeignet ist, umfassend eine zur Rückseite des Rahmens hin geöffnete Kettenstrebe.

15. Rahmen für ein Zweirad, insbesondere für ein Mountainbike oder Rennrad, der insbesondere für die Verwendung einer Zugverlegung nach einem der vorstehenden Ansprüche von 1 bis 8 geeignet ist, umfassend eine im Bereich des Tretlagers an dessen Unterseite, vorzugsweise in einer Öffnung des Rahmens angeordnete Zugführung, wobei die Öffnung durch einen als Abdeckung ausgebildeten Einsatz verschließbar ist.

16. Schaltauge, insbesondere für eine Zugverlegung für ein Zweirad, insbesondere für ein Mountainbike oder Rennrad nach Anspruch 1 bis 8 und/oder für einen Rahmen mit einer Zugverlegung für ein Zweirad, insbesondere für ein Mountainbike oder Rennrad, welches einen Zuganschlag oder eine Zughalterung für einen mechanischen oder einen Bowdenzug umfasst.

17. Schaltauge, insbesondere für eine Zugverlegung für ein Zweirad, insbesondere für ein Mountainbike oder Rennrad nach Anspruch 1 bis 8 und/oder für einen Rahmen mit einer Zugverlegung für ein Zweirad, insbesondere für ein Mountainbike oder Rennrad, welches eine Halterung für eine Hydraulikleitung umfasst.

18. Schaltauge, insbesondere für eine Zugverlegung für ein Zweirad, insbesondere für ein Mountainbike oder Rennrad nach Anspruch 1 bis 8 und/oder für einen Rahmen mit einer Zugverlegung für ein Zweirad, insbesondere für ein Mountainbike oder Rennrad, welches eine Halterung für eine elektrische Leitung und/oder einen Anschluß für einen elektrischen Leiter umfasst, insbesondere um für elektrisch nicht oder wenig leitfähige Rahmen eine Anschlußpunkt für einen elektrischen Antrieb, vorzugsweise für einen im Hinterrad angeordneten elektrischen Antrieb mit der Achsaufnahme des Hinterrads bereit zu stellen.
